# EUROPÄISCHE PATENTSCHRIFT

(11) **EP 1 323 686 B1**
(45) Veröffentlichungstag und Bekanntmachung des Hinweises auf die Patenterteilung: **19.03.2008**
(21) Anmeldenummer: 02028770.2
(22) Anmeldetag: 23.12.2002
(51) Int. Cl.: C04B 35/83, C04B 38/00, C04B 41/88, C04B 35/573, F16D 69/02

(54) **Verfahren zur Herstellung von Hohlkörpern aus faserverstärkten keramischen Materialien**
Method of production of hollow bodies out of fibre reinforced ceramic materials
Procédé de fabrication des corps creux de matériaux céramiques à renfort de fibres

(30) Priorität: 31.12.2001 DE 10164627
(43) Veröffentlichungstag der Anmeldung: 02.07.2003
(73) Patentinhaber: AUDI AG, 85045 Ingolstadt (DE)
(72) Erfinder: Bauer, Moritz, 86153 Augsburg (DE); Heine, Michael, Dr., 86695 Allmannshofen (DE); Kienzle, Andreas, Dr., 86672 Thierhaupten (DE); Hüner, Ronald, Dr., 86674 Baar (DE); Rahn, Andreas, 86637 Wertingen (DE); Zimmermann-Chopin, Rainer, Dr., 86679 Ellgau (DE)
(74) Vertreter: Deckers, Hellmuth Alexander

(56) Entgegenhaltungen:
- EP-A- 0 461 980
- WO-A-96/13470
- DE-A- 19 834 571
- FR-A- 1 563 485
- US-A- 4 847 063

## Beschreibung

Die vorliegende Erfindung bezieht sich auf ein Verfahren zur Herstellung von Körpern aus faserverstärkten Materialien mit Hohlräumen. Insbesondere betrifft die Erfindung ein Verfahren zur endkonturnahen Herstellung eines porösen faserverstärkten Kohlenstoffhaltigen Formkörpers mit Ausnehmungen oder Hohlräumen, insbesondere eines faserverstärkten C/C-Körpers (mit Kohlenstoffasern verstärkter Kohlenstoff, engl. "CFC" oder "CFRC", carbon fibre reinforced carbon), der aus binderhaltigen Faserstoffmassen mittels eines Preßvorganges unter Verwendung von Preß- oder Formkernen geformt und in einer nachfolgenden thermischen Behandlung zu C/C umgesetzt wird, sowie gegebenenfalls die Nachverdichtung dieses porösen faserverstärkten Kohlenstoff-haltigen Formkörpers unter Ausbildung einer keramischen Matrix, insbesondere durch eine Flüssigmetall-Infiltration in den C/C-Körper, gegebenenfalls mit anschließender Wärmebehandlung, wobei die Matrix dann Metalle und die durch Reaktion mit dem Kohlenstoff gebildeten Metallcarbide sowie gegebenenfalls Reste von nicht umgesetztem Kohlenstoff enthält.

Das erfindungsgemäße Verfahren betrifft ebenfalls die Herstellung von mit Kohlenstoffasern verstärkten keramischen Verbundwerkstoffen, die Ausnehmungen und Hohlräume aufweisen, welche über die Flüssigmetallinfiltration mit Siliciumschmelzen unter Reaktion zumindest eines Teils des Kohlenstoffs zu Siliciumcarbid in mit Kohlenstoffasern verstärkte Verbundwerkstoffe mit SiC-, Si- und C-haltiger Matrix (C/SiC- oder C/C-SiC-Werkstoffe) umgesetzt werden. Anwendung finden diese Verbundwerkstoffe insbesondere bei Brems-, Kupplungs- und Reibscheiben, sowie als hochtemperaturbeständige Konstruktionswerkstoffe.

Heutzutage überwiegend verwendete Materialien für Bremsscheiben im Automobilbau sind Stahl oder Grauguß, und in der Luftfahrt mit Kohlenstoffasern verstärkte Kohlenstoff-Werkstoffe (C/C). Die von den Scheibenmaterialien geforderten Eigenschaften sind dabei hohe mechanische Stabilität, Temperaturbeständigkeit, Härte und Verschleißfestigkeit gegenüber dem Reibpartner in der Reibpaarung der Bremse. Die Einsatztemperatur bisher verwendeter Graugußbremsscheiben ist dabei durch den Schmelzpunkt des Materials limitiert. Die mechanische Versagenstemperatur liegt, abhängig von der Belastung, bereits deutlich unterhalb des Schmelzpunktes. Weiterhin tritt durch Umwandlung des metallischen Gefüges beim Erhitzen die Gefahr einer Rißbildung in den Scheiben auf. Die Verwendung von faserverstärkter Keramik als Werkstoff für Bremsscheibenanwendungen erweist sich als Lösung für diese Problematik. Insbesondere Werkstoffe auf der Basis von mit Kohlenstoffasern verstärktem Siliciumcarbid (C/SiC) haben sich für diese Anwendung als geeignet erwiesen. Die Vorteile dieses Materials sind die niedrigere Dichte (damit niedrigeres Gewicht bei gleichem Volumen), die hohe Härte und Temperaturbeständigkeit bis ca. 1400 °C und nicht zuletzt die extrem hohe Verschleißbeständigkeit. Die deutlich geringere Dichte von Bremsscheiben aus diesen C/SiC-Werkstoffen erweist sich als positiver Einflußfaktor zur Verbesserung des Komforts und der Sicherheit durch die Reduktion der ungefederten Massen bei Kraftfahrzeugen und als wirtschaftlicher Faktor im Bereich der Luftfahrt. Die große Härte und Verschleißbeständigkeit von C/SiC-Bauteilen ermöglicht hier weit höhere Standzeiten im Vergleich zu bisher üblichen Materialien auf C/C-Basis oder Metallbasis.

Verfahren zur Herstellung von C/SiC-Bauteilen sind beispielsweise aus den Schriften DE-A 198 56 721, DE-C 197 11 829 und DE-A 197 10 105 bekannt und umfassen unter anderem die folgenden Schritte :
- Herstellen einer preßfähigen Mischung oder bildbaren Faserstoffmasse aus kohlenstoffhaltigen Fasern oder Faserbündeln, die mit einer Beschichtung überzogen sein können, einerseits und Füllmitteln und/oder thermisch aushärtbaren Bindemitteln wie beispielsweise Harzen und/oder Pech andererseits,
- Formgebung der bildbaren Faserstoffmasse oder der preßfähigen Mischung unter Druck und Aushärtung unter Temperatur, sowie Carbonisierung der kohlenstoffhaltigen Füll- und Bindemittel zur Herstellung eines Formkörpers, insbesondere eines aus mit Kohlenstoffasern verstärktem Kohlenstoff bestehenden Formkörpers (C/C) und gegebenenfalls Graphitierung
- Infiltrieren zumindest einer Randschicht des Formkörpers mit einer Silicium-Schmelze und zumindest partielle Reaktion mit dem Kohlenstoff im Formkörper zu SiC, wobei sich ein Formkörper bildet, der wenigstens in der Randschicht aus einer Verbundkeramik mit in einer Matrix aus überwiegend SiC, Si und C eingebetteten, kohlenstoffhaltigen Fasern besteht (hier ebenfalls als C/SiC bezeichnet).

Im folgenden soll unter C/SiC allgemein auch die Werkstoffvariante verstanden werden, bei der wie oben beschrieben nur eine Randschicht siliciert wird.

Unter einer bildbaren Faserstoffmasse sind sowohl die faserhaltigen preßfähigen Massen, die typischerweise Kurzfasern oder Kurzfaserbündel enthalten, als auch Matten, Gewebe, oder Vliese, die sich unter anderem in Prepregtechnik verarbeiten lassen, zusammengefaßt. Letztere sind insbesondere auch dazu geeignet, nahezu oder ganz ohne Druckeinwirkung geformt zu werden

Zu den üblichen Herstellungsverfahren gehören auch diejenigen, bei denen der C/C-Körper über die Flüssig- oder Gas-Phase mit Kohlenstoff-Vorläufern ("carbon precursors", Substanzen, die beim Erhitzen unter Ausschluß von oxydierenden Medien Kohlenstoff bilden) oder mit Kohlenstoff nachverdichtet wird, oder die Matrix aus überwiegend SiC, Si und C durch eine Gasphaseninfiltration (CVD, Chemical Vapour Deposition, oder CVI, Chemical Vapour Infiltration) oder durch die Pyrolyse von Si-haltigen präkeramischen Polymeren erzeugt wird.

Heutige metallische Bremsscheiben besitzen häufig von Luft durchströmte Lüftungsschlitze oder Lüftungskanäle innerhalb der Scheibe, um das Temperaturniveau der Scheibe zu reduzieren und den Verschleiß der Reibbeläge bei hoher Belastung zu senken. Derartige Lüftungskanäle werden auch bei Bremsscheiben auf C/SiC-Basis ausgebildet, besonders um das Temperaturniveau mit Rücksicht auf die Bremsbeläge und weitere Systemkomponenten zu senken.

Ein Verfahren zur Herstellung von Reibeinheiten aus C/C-SiC-Werkstoff mit Lüftungskanälen, Hohlräumen und Ausnehmungen, bei dem ein endkontumah strukturierter poröser Kohlenstoffkörper mit flüssigem Silicium infiltriert wird, ist aus der EP-B 0 788 468 bekannt. Dieses Verfahren nutzt den Umstand, daß sich die Siliciumflüssiginfiltration und Ausbildung der Si- und SiC-reichen Verbundwerkstoff-Matrix nahezu ohne Geometrieänderung des C/C-Vorkörpers vollzieht, so daß die Hohlräume und Ausnehmungen bereits im relativ weichen und gut zu bearbeitenden C/C-Vorkörper angelegt werden können und nicht erst in der sehr harten C/C-SiC-Verbundkeramik.

In der DE-C 198 34 571 wird ein weiteres Verfahren vorgeschlagen, Hohlräume in einem Werkstück aus C/SiC-Verbundkeramik zu bilden. Die Hohlräume entstehen bei der Vorformfertigung durch Druckformgebung unter Verwendung von Kernen aus Silicium, Siliciumlegierungen oder Si/BN-Mischungen. Dabei werden die Kerne bis zum Schritt der Flüssiginfiltration mit Silicium nicht aus der Vorform entfernt, sondern dienen vielmehr als Siliciumquelle für die Silicierung. Die Vorform muß vor dem Silicieren erhitzt und zu einem C/C-Vorkörper umgesetzt werden, wobei die organischen Bestandteile, wie zum Beispiel Binder, zersetzt werden und eine Schwindung der Vorform eintritt. Diese Schwindung führt zu einem Aufschrumpfen des Vorkörpers auf die siliciumhaltigen Kerne, welche ihrerseits durch die Erhitzung noch zusätzlich eine thermische Expansion erfahren. Im allgemeinen treten hier unerwünschte Spannungen oder gar Zerstörungen in der Vorform auf, die es zu vermeiden gilt.

Beim thermischen Aushärten der preßfähigen oder bildbaren Faserstoffmassen, die im allgemeinen gleichzeitig unter Druckeinwirkung erfolgt, wird die erforderliche Wärme üblicherweise von außen in das Werkstück eingebracht. Dies geschieht durch Beheizen der Form, der Presse oder der Preßstempel, bzw. durch Einbringen der Werkstücke in einen Ofen. Dabei wird der äußere Bereich des Werkstücks auf höhere Temperaturen erhitzt als der innere Bereich, damit durch den Temperaturgradienten die Wärme ins Innere des Werkstücks transportiert werden kann. Diese ungleichmäßige Erwärmung kann zu Verspannungen im Werkstück führen; die in der äußeren Zone ablaufenden chemischen und physikalischen Vorgänge können sogar auch dazu führen, daß beispielsweise bei der Erwärmung und den dabei ablaufenden chemischen Reaktionen freiwerdende Gase nicht durch die äußere Zone entweichen können und zum Platzen des Werkstücks oder zu Rissen in dem Werkstück beitragen.

Aus der gleichzeitig eingereichten deutschen Patentanmeldung Nr. 101 64 231.8 ist bekannt, solche Preßmassen einzusetzen, die zumindest beim Verpressen eine elektrische Leitfähigkeit von mindestens 0,1 S/m aufweisen, und die vor, während oder nach dem Pressen durch Hindurchleiten von elektrischem Strom durch die Joule'sche Wärme aufgeheizt werden. Versucht man jedoch, ein derartiges Verfahren anzuwenden bei Grünkörpern bzw. Preßmassen, die elektrisch isolierende Formkerne enthalten, so beobachtet man, daß durch die ungleichmäßigen Querschnitte der leitenden Bereiche lokale Überhitzungen auftreten können, die den gewünschten Effekt einer gleichmäßigen Durchwärmung des Werkstücks zunichte machen. Ebenso sind auch Formkerne mit zu hoher Leitfähigkeit ungeeignet, da sie die den Heizstrom kurzschließen, ohne eine hinreichende Erwärmung hervorzurufen.

Aufgabe der Erfindung ist es daher, ein Verfahren bereitzustellen, das zur Herstellung von Hohlkörpern aus faserverstärkten Verbundwerkstoffen geeignet ist, die anschließend durch Infiltration mit flüssigen Metallen, insbesondere flüssigem Silicium und nachfolgenden Reaktion in Formkörper aus faserverstärkter carbidischer Keramik überführt werden.

Diese Aufgabe wird erfindungsgemäß dadurch gelöst, daß solche Preßmassen oder bildbare Faserstoffmassen eingesetzt werden, die zumindest während des Preßvorganges eine elektrische Leitfähigkeit von mindestens 0,1 S/m aufweisen, und die vor, während oder nach dem Pressen, bzw. der Formgebung der bildbaren Faserstoffmasse, durch Hindurchleiten von elektrischem Strom durch die Joule'sche Wärme aufgeheizt werden, und daß gleichzeitig elektrisch leitfähige Formkerne eingesetzt werden, wobei die Leitfähigkeit von Preßmasse und Kernen so abgestimmt ist, daß eine gleichmäßige Wärmeentwicklung sowohl bei der Verpressung oder Formgebung als auch bei der Härtung zum Grünkörper erreicht wird.

Dabei hat es sich als vorteilhaft erwiesen, daß die Leitfähigkeit der Kerne zwischen dem 0,1- bis 100- fachen der Leitfähigkeit der preßfähigen Masse, bevorzugt zwischen 0,25- bis 30-fachen und insbesondere zwischen dem 0,5- bis 10-fachen der Leitfähigkeit der preßfähigen oder bildbaren Masse beträgt. Der Wert der Leitfähigkeit der preßfähigen oder bildbaren Masse bezieht sich hierbei auf die Zustände vor, während und direkt nach dem Preßvorgang.

Die Erfindung betrifft daher ein Verfahren zur Herstellung von Körpern aus faserverstärkten Materialien mit Hohlräumen, wobei
- im ersten Schritt Formkerne hergestellt werden, deren Form der der Hohlräume entspricht,
- im zweiten Schritt mindestens ein Formkern zusammen mit einer preßfähigen Masse oder bildbaren Faserstoffmasse in eine Form eingebracht wird, wobei die preßfähige Masse Kohlenstoffasern und/oder Kohlenstoffilamente und thermisch härtbare carbonisierbare Binder enthält, derart daß die Lage der Kerne der gewünschten Lage der zu bildenden Hohlräume entspricht,
- im dritten Schritt die Masse durch Erwärmen auf eine Temperatur von 120 °C bis 280 °C, gegebenenfalls unter Druck zu einem Grünkörper verfestigt wird,
wobei die Erwärmung im dritten Schritt zumindest anteilsweise dadurch bewirkt wird, daß ein elektrischer Strom durch die preßfähige Masse sowie durch mindestens einen Formkern geleitet wird, wobei die Formkerne elektrisch leitend sind und aus Metallen oder Polymeren bestehen, deren Schmelz- oder Zersetzungstemperatur mindestens 30 °C über der Temperatur der Verfestigung der Masse zu einem Grünkörper liegt, und wobei die elektrische Leitfähigkeit der Polymere durch einen Volumenanteil von mindestens 5 % an elektrisch leitfähigen Fasern und/oder elektrisch leitfähigen Partikeln bewirkt wird. In bevorzugter Weise kann nach dem dritten Schritt im vierten Schritt der verfestigte Grünkörper durch Erhitzen in einer nicht oxidierenden Atmosphäre auf eine Temperatur von ca. 750 °C bis ca. 2400 °C zu einem C/C-Körper carbonisiert und/oder graphitiert werden, wobei die Erwärmung im vierten Schritt zumindest anteilsweise dadurch bewirkt wird, daß ein elektrischer Strom durch den verfestigten Grünkörper sowie durch mindestens einen Formkern geleitet wird, wobei die Formkerne elektrisch leitend sind und aus Metallen oder Polymeren bestehen, deren Schmelz- oder Zersetzungstemperatur mindestens 30 °C über der Temperatur der Verfestigung der Masse zu einem Grünkörper liegt, und wobei die elektrische Leitfähigkeit der Polymere durch einen Volumenanteil von mindestens 5 % an elektrisch leitfähigen Fasern und/oder elektrisch leitfähigen Partikeln bewirkt wird.

Für die elektrisch leitenden Formkerne können wiederverwendbare oder verlorene Kerne eingesetzt werden. Wiederverwendbare Formkerne bestehen typischerweise aus Metallen.

Als verlorene Kerne werden typischerweise Polymere eingesetzt, deren Schmelz- oder Zersetzungstemperatur mindestens 30 °C über der Temperatur der Verfestigung der Massen zum Grünkörper liegt. Die elektrische Leitfähigkeit der Polymere wird bevorzugt dadurch erreicht, daß die Formkerne einen Volumenanteil von mindestens 5 % an elektrisch leitfähigen Fasern und/oder elektrisch leitfähigen Partikeln enthalten. Die elektrische Leitfähigkeit der verlorenen Kerne beträgt typischerweise mindestens 0,01 S/m, bevorzugt mindestens 1 S/m und besonders bevorzugt zwischen 1 und 100 S/m. Bevorzugt sind die elektrisch leitfähigen Fasern ausgewählt aus der Gruppe der Kohlenstoffasern, Graphitfasern, mit Kohlenstoff beschichteten Fasern, Metallfasern, Metallspänen und Metallwhiskern, und die elektrisch leitenden Partikel sind ausgewählt aus der Gruppe der Kohlenstoffpartikel, Graphitpartikel, Ruß, Metallkörner, Metallpulver, Metall-Flakes und Metallgrieß. Als Metalle für Kern oder Füllstoff sind Al, Si, Ti, Cr und Fe besonders bevorzugt.

Das erfindungsgemäße Verfahren sieht vor, daß im zweiten Schritt preßfähige Massen aus Kohlenstoffasern, thermisch aushärtbaren Bindern, und -insbesondere kohlenstoffhaltigen- Zuschlagstoffen zu Grünkörpern mit Hohlräumen und/oder Aussparungen verpreßt werden.

Bevorzugt werden die Kohlenstoffaserschichten des C/C-Vorkörpers in der Nähe des Kerns in vorgegebener Vorzugsrichtung der Kohlenstoff-Verstärkungsfasern auf den Kern aufgebaut.

Hierfür werden bevorzugt solche preßfähigen Massen verwendet, die Kohlenstoffasern mit einer mittleren Länge von mindestens 50 mm enthalten. Bevorzugt wird dann die preßfähige Masse des zweiten Schrittes so in die Form gefüllt, daß die Kohlenstoffasern überwiegend parallel zur Richtung der höchsten Zugbeanspruchung des resultierenden Formteils orientiert sind. Überwiegend bedeutet in diesem Zusammenhang mindestens 50 %. Es ist auch möglich, die Kerne mit parallel gelegten und gebundenen Kohlenstoffäden (englisch "tapes" oder "UDT" = unidirectional tapes genannt) zu umwickeln, und diese Hülle gegebenenfalls mit thermisch aushärtbaren Bindern zu fixieren. Auf diese Schicht vorzugsorientierter Kohlenstoffasern oder -fäden werden dann üblicherweise weitere preßfähige Massen mit geringerer Faser- oder Faserbündellänge geschichtet.

In einer anderen bevorzugten Ausführungsform werden Kohlenstoffasern in Form von beschichteten Kurzfaserbündeln eingesetzt. Besonders bevorzugt sind hierbei mit graphitiertem Kohlenstoff beschichtete Fasern, beziehungsweise Faserbündel mit mittleren Längen von höchstens 50 mm.

Als thermisch aushärtbare Binder werden Peche wie Kohlenteerpech oder Erdölpech und/oder bevorzugt härtbare Harze wie Phenolharze, Epoxidharze, Polyimide, füllstoffhaltige Mischungen mit Furfurylalkohol oder Furanharze eingesetzt. Die Massen werden hierzu in eine Preßform eingefüllt, wobei in der Form verlorene Kerne vorgesehen werden. Die Kerne nehmen den Raum der später in der Verbundkeramik zu bildenden Hohlräume oder Aussparungen ein. Nach dem Befüllen der Preßform wird die Masse gepreßt und unter Temperatureinwirkung ausgehärtet.

Nach der Carbonisierung des Grünkörpers werden gegebenenfalls angefallene Pyolysebeziehungsweise Kohlenstoffreste in den gebildeten Hohlräumen beseitigt und es wird ein poröser C/C-Körper mit Hohlräumen oder Ausnehmungen erhalten, der sich weiterverwerten läßt. Er kann nachbearbeitet oder wiederum zu komplexeren Strukturen zusammengesetzt oder geklebt werden.

Im einem fünften Schritt wird der poröse C/C-Körper gegebenenfalls nachverdichtet, um zu einem besser gebrauchsfähigen Werkstück zu gelangen.

In einer bevorzugten Ausführungsform des erfindungsgemäßen Verfahrens wird der Kohlenstoff des C/C-Körpers durch eine Schmelzinfiltration mit Metallen und die gegebenenfalls anschließende Wärmebehandlung zumindest teilweise zu den entsprechenden Carbiden umgesetzt. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, nicht umgesetzten Kohlenstoff sowie nicht umgesetztes Silicium. Hierzu wird der C/C-Körper mit Siliciumpulver oder Siliciumkörpern überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann das Flüssigsilicierverfahren auch mit Siliciumlegierungen durchgeführt werden, die unter anderem Metalle wie Cr, Fe, Co, Ni, Ti und/oder Mo enthalten können.

Das beschriebene Verfahren kann bevorzugt zur Herstellung von Bremsscheiben oder Kupplungsscheiben verwendet werden. Hierbei werden in eine zylindrische Form die preßfähige Masse sowie die Kerne gefüllt, wobei als unterste und oberste Lage bevorzugt durchgehende Schichten der preßfähigen Masse gefüllt werden. Die Dicke der Boden- bzw. der Deckschicht beträgt nach dem Verpressen vorzugsweise mindestens 7 mm. Diese Schichten bilden die Reibschicht der Brems- oder Kupplungsscheibe. Der Formkörper, der die Brems- oder Kupplungsscheibe bildet, hat üblicherweise die Gestalt einer Ringscheibe, d. i. der achsennahe Raum ist durchgehend über die gesamte Dicke der Scheibe leer. Ein oder mehrere Kerne werden bevorzugt so angeordnet, daß die sich bildenden Hohlräume rotationssymmetrisch um die Achse des Zylinders angeordnet sind, wobei bevorzugt mindestens 2 und höchstens 16 Hohlräume entstehen. Die Form der Kerne ist bevorzugt derart, daß die gebildeten Hohlräume von der Peripherie des zylindrischen Formkörpers bis zum inneren Rand des Formkörpers reichen und damit einen offenen Durchgang zwischen dem inneren und äußeren zylindrischen Rand der Ringscheibe bilden.

Während der Verfestigung des Grünkörpers durch Pressen und/oder Abbinden (Härten) wird das Werkstück durch Hindurchleiten von elektrischem Strom aufgeheizt. Dabei wird der Strom über die Deck- und Bodenfläche der zylindrischen Werkstücke eingeleitet. Im Gegensatz zu einer Erwärmung durch Wärmeleitung von außen wird dadurch eine gleichmäßige Erwärmung über den Querschnitt und über die Höhe des zylindrischen Werkstücks erreicht. Durch die Verwendung der elektrisch leitenden Formkerne werden lokale Überhitzungen vermieden und die Heizleistung erhöht. Letzteres kann zur Verringerung der Preßzeit genutzt werden.

Die auf diese Weise hergestellten Hohlkörper können mit Vorteil als Reibkörper für Kupplungen oder Bremsen in KFZ, Schienenfahrzeugen, Flugzeugen etc. eingesetzt werden.

## Patentansprüche

1. Verfahren zur Herstellung von Körpern aus faserverstärkten Materialien mit Hohlräumen, wobei
- im ersten Schritt Formkerne hergestellt werden, deren Form der der Hohlräume entspricht,
- im zweiten Schritt mindestens ein Formkern zusammen mit einer preßfähigen Masse oder bildbaren Faserstoffmasse in eine Form eingebracht wird, wobei die preßfähige Masse Kohlenstoffasern und/oder Kohlenstoffilamente und thermisch härtbare carbonisierbare Binder enthält, derart daß die Lage der Kerne der gewünschten Lage der zu bildenden Hohlräume entspricht,
- im dritten Schritt die Masse durch Erwärmen auf eine Temperatur von 120 °C bis 280 °C, gegebenenfalls unter Druck zu einem Grünkörper verfestigt wird,
**dadurch gekennzeichnet, daß** die Erwärmung im dritten Schritt zumindest anteilsweise dadurch bewirkt wird, daß ein elektrischer Strom durch die preßfähige Masse sowie durch mindestens einen Formkern geleitet wird, wobei die Formkerne elektrisch leitend sind und aus Metallen oder Polymeren bestehen, deren Schmelz- oder Zersetzungstemperatur mindestens 30 °C über der Temperatur der Verfestigung der Masse zu einem Grünkörper liegt, und wobei die elektrische Leitfähigkeit der Polymere durch einen Volumenanteil von mindestens 5 % an elektrisch leitfähigen Fasern und/oder elektrisch leitfähigen Partikeln bewirkt wird.

2. Verfahren nach Anspruch 1, **dadurch gekennzeichnet, daß** nach dem dritten Schritt - im vierten Schritt der verfestigte Grünkörper durch Erhitzen in einer nicht oxidierenden Atmosphäre auf eine Temperatur von ca. 750 °C bis ca. 2400 °C zu einem C/C-Körper carbonisiert und/oder graphitiert wird,
**dadurch gekennzeichnet, daß** die Erwärmung im vierten Schritt zumindest anteilsweise dadurch bewirkt wird, daß ein elektrischer Strom durch den verfestigten Grünkörper sowie durch mindestens einen Formkern geleitet wird, wobei die Formkerne elektrisch leitend sind und aus Metallen oder Polymeren bestehen, deren Schmelz- oder Zersetzungstemperatur mindestens 30 °C über der Temperatur der Verfestigung der Masse zu einem Grünkörper liegt, und wobei die elektrische Leitfähigkeit der Polymere durch einen Volumenanteil von mindestens 5 % an elektrisch leitfähigen Fasern und/oder elektrisch leitfähigen Partikeln bewirkt wird.

3. Verfahren nach Anspruch 1 oder 2, **dadurch gekennzeichnet, daß** die Metalle ausgewählt sind aus Aluminium, Silicium, Titan, Chrom und Eisen.

4. Verfahren nach Anspruch 1 oder 2, **dadurch gekennzeichnet, daß** die elektrische Leitfähigkeit der preßfähigen Masse oder bildbaren Faserstoffmasse oberhalb 0,1 S/m liegt.

5. Verfahren nach Anspruch 2, **dadurch gekennzeichnet, daß** die elektrische Leitfähigkeit des Grünkörpers im Bereich von 0,1 bis 50 S/m liegt.

6. Verfahren nach einem der vorangegangenen Ansprüche, **dadurch gekennzeichnet, daß** die elektrische Leitfähigkeit der Formkerne im Bereich des 0,1 bis 100-fachen der Leitfähigkeit der preßfähigen Masse, der bildbaren Faserstoffmasse oder des Grünkörpers liegt.

7. Verfahren nach einem der vorangegangenen Ansprüche, **dadurch gekennzeichnet, daß** die elektrische Leitfähigkeit der Formkerne mindestens 0,01 S/m beträgt.

8. Verfahren nach Anspruch 1 oder 2, **dadurch gekennzeichnet, daß** die elektrisch leitfähigen Fasern ausgewählt sind aus der Gruppe der Kohlenstoffasern, Graphitfasern, mit Kohlenstoff beschichteten Fasern, Metallfasern, Metallspäne und Metallwhisker.

9. Verfahren nach Anspruch 1 oder 2, **dadurch gekennzeichnet, daß** die elektrisch leitenden Partikel ausgewählt sind aus der Gruppe der Kohlenstoffpartikel, Graphitpartikel, Ruß, Metallkörner, Metallpulver, Metall-Flakes und Metallgrieß.

## Claims

1. A process for producing bodies comprising fiber-reinforced materials and having hollow spaces, where
- mold cores whose shape corresponds to that of the hollow spaces are produced in a first step,
- at least one mold core together with a pressable composition or formable fiber composition are introduced into a mold, where the pressable composition comprises carbon fibers and/or carbon filaments and thermally curable carbonizable binders, in such a way that the position of the cores corresponds to the desired position of the hollow spaces to be formed in a second step,
- the composition is strengthened by heating to a temperature of from 120°C to 280°C, if appropriate under pressure, in a third step to form a green body,
wherein heating in the third step is at least partly effected by an electric current being passed through the pressable composition and through at least one mold core, with the mold cores being electrically conductive and consisting of metals or polymers whose melting point or decomposition temperature is at least 30 °C above the temperature at which the composition is strengthened to give a green body and the electrical conductivity of the polymers being produced by a proportion by volume of at least 5 % of electrically conductive fibers and/or electrically conductive particles.

2. The process as claimed in claim 1, wherein, after the third step, the strengthened green body is carbonized and/or graphitized in a fourth step by heating in a nonoxidizing atmosphere to a temperature of from about 750°C to about 2400°C to give a C/C body,
wherein heating in the fourth step is at least partly effected by an electric current being passed through the pressable composition and through at least one mold core, with the mold cores being electrically conductive and consisting of metals or polymers whose melting point or decomposition temperature is at least 30 °C above the temperature at which the composition is strengthened to give a green body and the electrical conductivity of the polymers being produced by a proportion by volume of at least 5 % of electrically conductive fibers and/or electrically conductive particles.

3. The process as claimed in claim 1 or 2, wherein the metals are selected from among aluminum, silicon, titanium, chromium and iron.

4. The process as claimed in claim 1 or 2, wherein the electrical conductivity of the pressable composition or formable fiber composition is above 0.1 S/m.

5. The process as claimed in claim 2, wherein the electrical conductivity of the green body is in the range from 0.1 to 50 S/m.

6. The process as claimed in any of the preceding claims, wherein the electrical conductivity of the mold cores is in the range from 0.1 to 100 times the conductivity of the pressable composition, the formable fiber composition or the green body.

7. The process as claimed in any of the preceding claims, wherein the electrical conductivity of the mold cores is at least 0.01 S/m.

8. The process as claimed in claim 1 or 2, wherein the electrically conductive fibers are selected from the group consisting of carbon fibers, graphite fibers, carbon-coated fibers, metal fibers, metal turnings and metal whiskers.

9. The process as claimed in claim 1 or 2, wherein the electrically conductive particles are selected from the group consisting of carbon particles, graphite particles, carbon black, metal grains, metal powder, metal flakes and metal grit.

## Revendications

1. Procédé de fabrication de corps constitués de matériaux à renfort de fibres avec des cavités, dans lequel
- dans la première étape, on fabrique des noyaux dont la forme correspond à celle des cavités,
- dans la deuxième étape, au moins un noyau, conjointement avec une masse apte au moulage ou une masse fibreuse apte au formage, est introduit dans un moule, sachant que la masse apte au moulage contenant des fibres de carbone et/ou des filaments de carbone et des liants carbonisables pouvant être durcis par voie thermique, de telle sorte que la position des noyaux correspond à la position souhaitée des cavités à former,
- dans la troisième étape, la masse est solidifiée par chauffage à une température de 120 °C à 280 °C, le cas échéant sous pression afin d'obtenir un corps vert,
**caractérisé en ce que** le chauffage dans la troisième étape est au moins en partie provoqué par le fait qu'un courant électrique est guidé au travers de la masse apte au moulage et au travers d'au moins un noyau, les noyaux étant électroconducteurs et constitués de métaux ou de polymères dont la température de fusion ou de décomposition est supérieure d'au moins 30 °C à la température de solidification de la masse pour obtenir un corps vert, et sachant que la conductivité électrique des polymères étant due à une proportion en volume d'au moins 5 % de fibres électroconductrices et/ou de particules électroconductrices.

2. Procédé selon la revendication 1, **caractérisé en ce que**, après la troisième étape - dans une la quatrième étape, le corps vert solidifié est carbonisé et/ou graphitisé par chauffage dans une atmosphère non oxydante à une température d'environ 750 °C à environ 2 400 °C afin d'obtenir un corps C/C,
**caractérisé en ce que** le chauffage dans la quatrième étape est au moins en partie solidifié par le fait qu'un courant électrique est guidé au travers du corps vert solidifié et au travers d'au moins un noyau, les noyaux étant électroconducteurs et constitués de métaux ou de polymères dont la température de fusion ou de décomposition est supérieure d'au moins 30 °C à la température de solidification de la masse pour obtenir un corps vert, et la conductivité électrique des polymères étant due à une proportion en volume d'au moins 5 % de fibres électroconductrices et/ou de particules électroconductrices.

3. Procédé selon la revendication 1 ou 2, **caractérisé en ce que** les métaux sont choisis parmi l'aluminium, le silicium, le titane, le chrome et le fer.

4. Procédé selon la revendication 1 ou 2, **caractérisé en ce que** la conductivité électrique de la masse apte au moulage ou de la masse fibreuse apte au formage est supérieure à 0,1 S/m.

5. Procédé selon la revendication 2, **caractérisé en ce que** la conductivité électrique du corps vert se trouve dans la plage de 0,1 à 50 S/m.

6. Procédé selon l'une quelconque des revendications précédentes, **caractérisé en ce que** la conductivité électrique des noyaux se trouve dans la plage de 0,1 à 100 fois la conductivité de la masse apte au moulage, de la masse fibreuse apte au formage ou du corps vert.

7. Procédé selon l'une quelconque des revendications précédentes, **caractérisé en ce que** la conductivité électrique des noyaux est au moins égale à 0,01 S/m.

8. Procédé selon la revendication 1 ou 2, **caractérisé en ce que** les fibres électroconductrices sont choisies dans le groupe comprenant les fibres de carbone, fibres de graphite, fibres enduites de carbone, fibres métalliques, copeaux métalliques et trichites métalliques.

9. Procédé selon la revendication 1 ou 2, **caractérisé en ce que** les particules électroconductrices sont choisies dans le groupe des particules de carbone, particules de graphite, suie, grenailles métalliques, poudres métalliques, paillettes métalliques et granules métalliques.
